# EUROPÄISCHE PATENTSCHRIFT

(11) **EP 1 144 083 B1**
(45) Veröffentlichungstag und Bekanntmachung des Hinweises auf die Patenterteilung: **05.11.2003**
(21) Anmeldenummer: 99959284.3
(22) Anmeldetag: 18.11.1999
(51) Int. Cl.: B01D 46/52, F02M 35/024

(54) **FILTER MIT EINEM DURCH MINDESTENS EINE VERSTÄRKUNG VERSTÄRKTEN GEHÄUSE**
FILTER WITH A HOUSING THAT IS REINFORCED BY AT LEAST ONE REINFORCEMENT
FILTRE A CARTER RENFORCE PAR AU MOINS UN ELEMENT DE RENFORCEMENT

(30) Priorität: 23.12.1998 DE 19859854
(43) Veröffentlichungstag der Anmeldung: 17.10.2001
(73) Patentinhaber: FILTERWERK MANN + HUMMEL GmbH, 71631 Ludwigsburg (DE)
(72) Erfinder: KOLMEDER, Michael, D-84130 Dingolfing (DE); LUKA, Helmut, D-71672 Marbach (DE); PFAFF, Peter, D-74182 Obersulm (DE); PRICKEN, Franc, D-71640 Ludwigsburg (DE); SCHOLZ, Günther, D-70374 Stuttgart (DE); SOMMER, Bruno, D-71636 Ludwigsburg (DE)
(74) Vertreter: Voth, Gerhard
(86) Internationale Anmeldenummer: EP9908866
(87) Internationale Veröffentlichungsnummer: WO00038821

(56) Entgegenhaltungen:
- DE-A- 4 218 396
- DE-A- 19 534 254
- DE-A- 19 633 896
- US-A- 5 640 937

## Beschreibung

### Stand der Technik

Die Erfindung betrifft einen Filter, insbesondere für die Ansaugluft von Brennkraftmaschinen, welcher ein Gehäuse mit mindestens einer Versteifung aufweist, nach der Gattung des Patentanspruches 1 und 8.

Es ist allgemein bekannt, Filtergehäuse mit Versteifungen zu versehen. Dies geschieht im allgemeinen durch Anordnung von Rippen in den Gehäuseschalen, die zur Aufnahme des Filtereinsatzes lösbar miteinander verbunden sind. Hierzu läßt sich der DE 196 33 896 A1 ein Beispiel entnehmen.

Die Rippen stellen jedoch für das fließende, zu filternde Medium ein Strömungshindernis dar. Es kommt zu Verwirbelungen und Reibungsverlusten, die auch nicht vollständig vermieden werden können, wenn die Rippen entlang der Strömungsrichtung des zu filternden Fluids angeordnet werden. Die Versteifungswirkung der beschriebenen Rippen ist außerdem begrenzt, weil ihre Anordnung nur jeweils in den Gehäuseschalen erfolgen kann, während der für den Filtereinsatz vorgesehene Einbauraum frei bleiben muß. Insbesondere bei Gehäuseschalen für Flachfiltereinsätze lassen sich daher Strukturschwingungen, angeregt durch die Pulsation des zu filternden Mediums, nicht vollständig unterdrücken.

Man könnte nun die Wandstärken der Gehäuseschalen vergrößern oder zusätzliche Rippen an den Außenwandungen des Gehäuses unterbringen. Dies hätte jedoch ein erhöhtes Bauteilgewicht zur Folge, welches insbesondere im Kraftfahrzeugbereich aufgrund eines höheren Kraftstoffverbrauchs nicht wünschenswert ist. Außerdem würden Außenrippen auch einen höheren Platzbedarf zur Folge haben. Der Einbauraum für die Filterkomponenten ist jedoch begrenzt. Im übrigen entspricht die Anordnung von Außenrippen am Gehäuse häufig nicht den Anforderungen an das Design der Bauteile.

Das Dokument DE 42 18 396 offenbart eine Filtereinrichtung zum Filtrieren der Ansaugluft eines Verbrennungsmotors. Die Filtriereinrichtung besteht aus einem Gehäuse mit einem Gehäuseunterteil und einem Gehäusedeckel, wobei zwei Filtereinsätze in dem Gehäuse angeordnet sind. Die beiden Filtereinsätze sind parallel zueinander angeordnet und weisen an ihren benachbarten Seiten einen Verbindungssteg auf.

Weiterhin offenbart die DE 195 34 254 ein Filterelement, welches aus einem zick-zack-förmig gefalteten Filtermedium besteht. Das Filtermedium ist an seinen Stirnseiten von einem Filterrahmen umgeben. Über das Filtermedium, welches in der Form einer ebenen Platte hergestellt ist, verlaufen Stege. An den Stegen sind Schwertsegmente angeordnet, welche in die Falten des Filtermediums eingreifen und diese stabilisieren.

Es ist daher Aufgabe der Erfindung einen Filter zu schaffen, welcher Eigenschwingungen des Verbundes zwischen Gehäuseschalen und Filtereinsatz unterbindet, ohne die Außenabmessungen oder das Gewicht der Baueinheit wesentlich zu vergrößern. Diese Aufgabe wird durch die Merkmale des Patentanspruches 1 und 8 gelöst.

### Vorteile der Erfindung

Der erfindungsgemäße Filter, insbesondere für die Ansaugluft für Brennkraftmaschinen, weist einen Filtereinsatz auf, der von der Ansaugluft durchströmbar im Gehäuse angeordnet ist. Das Gehäuse besitzt Versteifungen, die zumindest teilweise aus einer Verstrebung bestehen, deren eines Ende an dem zu versteifenden Wandteil des Gehäuses angreift. Das andere Ende der Verstrebung ist abgestützt, wodurch der Versteifungseffekt erzielt wird. Für die Abstützung ergeben sich unterschiedliche Möglichkeiten, was im Vergleich zu einer Verrippung des Gehäuses eine größere Gestaltungsfreiheit bewirkt.

Die Versteifung kann an einer Stelle des Gehäuses angebracht werden, welche bei einer Schwingungserregung die größte Schwingungsamplitude besitzen würde. Auf diese Weise läßt sich eine wirksame Unterbindung dieser Schwingung erreichen. Bei den im wesentlichen rechteckigen Gehäuseschalen beim Einsatz von Flachfilterpatronen ist dieser Punkt die Mitte der Deckelfläche. Sofern die Versteifung an dieser Stelle angreift, kann dadurch die erste Eigenschwingungsform der als Membran schwingenden Deckelfläche vermindert oder sogar unterbunden werden.

Eine besondere Ausführungsform der Erfindung sieht vor, daß sich die Verstrebung, die durch eine Längsstrebe gebildet ist auf einer Querstrebe abstützt. Die Querstrebe wiederum verläuft zwischen zwei sich im wesentlichen gegenüberliegenden Wandteilen des Gehäuses. Die Querstrebe kann direkt über dem Filtereinsatz verlaufen, so daß zum Beispiel eine Versteifung des Deckelmittelpunktes in oben beschriebener Weise ermöglicht wird. Während die Längsstrebe Zug- und Druckkräfte aufzunehmen hat wirkt die Querstrebe als Biegebalken. Der Winkel zwischen Quer- und Längsstrebe kann 90° betragen. Es sind jedoch auch andere Winkel denkbar, insbesondere kann die Querstrebe an der Aufnahme der Längsstrebe einen Knick aufweisen. Es entsteht dann ein Fachwerk, welches einen Knoten am Ende der Längsstrebe aufweist. Bei richtiger Wahl der Anbindungswinkel kann die Querstrebe in zwei Fachwerksstäbe aufgelöst werden, die dann Zug- und Druckkräfte aufnehmen. Im Vergleich zu der Version mit der Querstrebe weist diese Konstruktion eine höhere Steifigkeit auf.

Eine weitere Ausgestaltung der Erfindung sieht vor, daß die Verstrebung aus einer Stütze besteht, die jeweils zwischen zwei zu versteifenden Wandteilen des Gehäuses verläuft. Hierdurch wird eine direkte Kraftleitung zwischen diesen Wandteilen erzeugt, die zu einer gegenseitigen Versteifung führt. Ergebnis ist eine optimale Versteifung bezogen auf den zu Versteifung notwendigen Materialaufwand.

Die Anordnung der beschriebenen Stütze im Filtergehäuse hat im Vergleich zu Versteifungsrippen den Vorteil einer höheren gestalterischen Flexibilität. Es kann gemäß einer weiteren Variante der Erfindung zum Beispiel eine Schraubverbindung oder eine Schnappverbindung in die Stütze integriert werden, wobei die Stütze jeweils auf zu versteifende Wandteile in unterschiedlichen Gehäuseteilen fußt. Insbesondere kann auf diese Weise eine Versteifung zwischen Gehäuse und Gehäusedeckel erzeugt werden.

Eine günstige Ausführungsform der Erfindung sieht vor, daß die Stütze durch eine Aussparung im Filtereinsatz hindurchläuft. Insbesondere für ein Gehäuse, welches zur Aufnahme von Flachfiltereinsätzen geeignet ist, läßt sich dann eine Stütze zwischen den gegenüberliegenden Mittelpunkten der Gehäuseschalen erreichen. Diese Punkte wären bei einer Bauteilschwingung diejenigen mit der größten Schwingungsamplitude. Auf diese Weise läßt sich also durch Vorsehen nur einer Stütze eine wesentliche Versteifungswirkung erzielen. Die Aussparung wird durch Vorsehen einer Zusatzdichtung zur Stütze hin vollständig abgedichtet, so daß eine zuverlässige Filterfunktion ohne Nebenluft gewährleistet ist.

Das Wort "Stütze" ist im weitesten Sinne zu verstehen. Diese kann zum Beispiel gemäß einer besonderen Ausführungsform der Erfindung auch aus einem Schwert bestehen, welches in eine der Filterfalten des Filtereinsatzes eintaucht. Die Aussparung im Filtereinsatz besteht dann zum Beispiel aus einem Schlitz im Faltengrund der Filterfalte, in die das Schwert hineingesteckt ist. Das Schwert ist in einer der beiden Gehäuseschalen angebracht, und zwar in der Weise, daß die zu versteifenden Wandteile angebunden sind. Das Schwert kann dabei zusätzlich Versteifungsfunktionen einer Stützrippe übernehmen. Das Schwert durchstößt den Filtereinsatz im Bereich der Aussparung, und ist auf der anderen Seite des Filtereinsatzes durch eine lösbare Verbindung, zum Beispiel eine Verschraubung befestigt. Alternativ zu einer Verschraubung kann auch eine Schnappverbindung vorgesehen sein. Denkbar ist es auch, ein Schwert mit Übermaß bezüglich des Gehäuseinnenraumes vorzusehen, welches durch Verbindung der Gehäuseschalen eine Druckkraft auf die zugehörige Aufnahme ausübt. In diesem Fall kommt die Versteifung durch einen Kraftschluß des Schwertes und der zugehörigen Aufnahme zustande. Eine zusätzliche Verbindung ist nicht notwendig. Daher kann auch die Aussparung im Filtereinsatz entfallen.

Die in den Filtereinsatz eingebrachte Aussparung kann gemäß einer besonders günstigen Ausführungsform rechteckig sein. Sie ist derart ausgerichtet, daß zwei der gegenüberliegenden Rechteckkanten, die als Querränder bezeichnet werden, parallel zu den Faltenkanten verlaufen. Insbesondere können die Ränder durch die Faltenkanten selbst gebildet werden. Eine solche Aussparung läßt sich fertigungstechnisch am günstigsten erzielen. Sie kann zum Beispiel durch Wasserstrahlschneiden oder Laserstrahlschneiden in das bereits gefaltete Filtermedium eingebracht werden.

Die Zusatzdichtung kann gemäß einer weiteren Variante der Erfindung fest mit der Aussparung verbunden werden. Es ist möglich, diese aus einem angespritzten Material, insbesondere PUR-Schaum zu erzeugen. Dies ist insbesondere dann sinnvoll, wenn die Ränder des Filtereinsatzes sowieso mit diesem Material versehen werden. Der PUR-Schaum kann ebenfalls dazu benutzt werden, die jeweils benachbarten Filterfalten an den Stirnrändern der Aussparung zu verschließen.

Eine Modifikation der Erfindung sieht jedoch zum Verschluß der Stirnränder der Aussparung eine einseitig auf das Filtermedium aufgebrachte Leimraupe vor. Diese kann vor dem Faltvorgang des Filtereinsatzes aufgebracht werden, wie dies auch an den äußeren Stirnseiten des Filtereinsatzes geschieht. Durch das einseitige Aufbringen der Leimraupe behält der Filtereinsatz seine Biegeelastizität quer zu den Filterfalten, was den Einbau erleichtert. Die Abdichtung mit Hilfe der Leimraupen kann selbstverständlich mit einem dichtenden Abschluß aus PUR-Schaum an der Oberseite des Filtereinsatzes kombiniert werden.

Es ist vorteilhaft, die Leimraupen, die sich am Rand der Aussparung befinden, über alle Filterfalten des Filtereinsatzes auszudehnen. Dies hat einerseits fertigungstechnische Vorteile. Es kann auf dem ungefalteten Filterpapier eine Endlosraupe aufgebracht werden, wie dies auch an den äußeren Stirnseiten des Filterbalgs geschieht. Außerdem bewirkt die Leimraupe dann eine zusätzliche Querversteifung des Filtereinsatzes. Hierdurch kann die Betriebssicherheit des Filters weiter erhöht werden.

Eine zweckmäßige Ausbildung des Erfindungsgedankens sieht vor, daß die Zusatzdichtung in eine Klemmeinrichtung eingebracht ist, wobei die Klemmeinrichtung durch die Verstrebung gebildet ist. Dies kann zum Beispiel durch Absätze geschehen, die nach Verschraubung der beiden Versteifungsteile eine Nut bilden, die die Zusatzdichtung zusammenpreßt. Neben einer Abdichtung wird auf diese Weise eine zusätzliche Versteifung des Faltenbalges selbst hervorgerufen. Auf diese Weise können Balgschwingungen, hervorgerufen durch die Druckpulsation der Ansaugluft, unterbunden werden.

### Zeichnung

Weitere Einzelheiten der Erfindung werden in den Zeichnungen anhand von schematischen Ausführungsbeispielen beschrieben. Hierbei zeigen
- Figur 1: den Querschnitt durch ein Filtergehäuse mit eingebautem, eine Aussparung aufweisenden Flachfilterelement, wobei durch die Aussparung eine Stützstrebe verläuft,
- Figur 2: das Detail x gemäß Figur 1
- Figur 3: den Querschnitt durch einen Flachfiltereinsatz mit einer Aussparung, und einem eingebrachten Schwert zur Stabilisierung und
- Figur 4: einen Flachfiltereinsatz gemäß Figur 3 im Querschnitt rechtwinklig zu dem gemäß Figur 3.

### Beschreibung der Ausführungsbeispiele

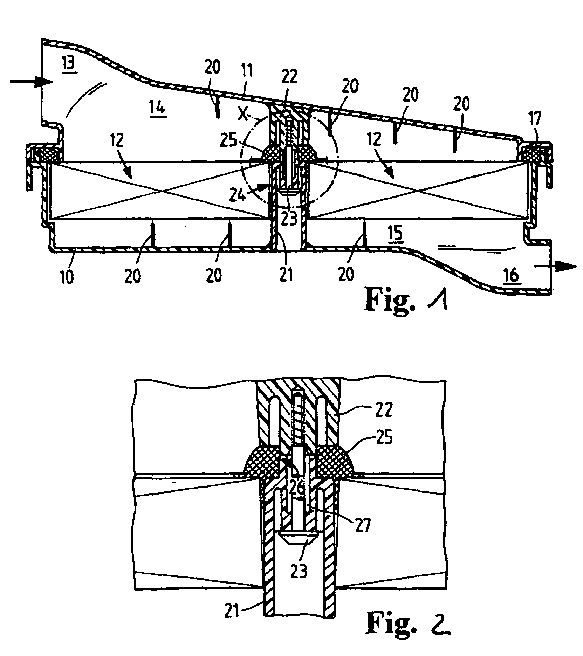

Der in Figur 1 dargestellte Filter weist ein Gehäuse bestehend aus einem Gehäusekörper 10 und einem Deckel 11 auf, wobei in den Gehäusekörper ein Filtereinsatz 12 eingesetzt ist. Die Ansaugluft tritt durch einen Einlaß 13 im Deckel 11 in eine Rohseite 14 des Gehäuses ein. Anschließend durchströmt sie den Filtereinsatz 12 um auf eine Reinseite 15 zu gelangen und durch einen Auslaß 16 das Gehäuse zu verlassen. Die Roh- und Reinseite des Gehäuses sind durch eine Randabdichtung 17, bestehend aus einem am Filtereinsatz 12 angespritzten PUR-Schaumwulst, abgedichtet. Der Gehäusekörper ist mit Hilfe von Versteifungsrippen 20 ausgesteift.

Zur Versteifung weist der Deckel an seinem Mittelpunkt eine Stütze auf, die aus einem im Gehäusekörper 10 befestigten Hohlstutzen 21 und einem im Deckel 11 befestigten Gewindestutzen 22 besteht. Diese werden durch eine Verbindungsschraube 23 miteinander verbunden, nachdem der Deckel 11 auf den Gehäusekörper 10 aufgesetzt worden ist. Dabei durchläuft die Stütze eine im Filtereinsatz 12 vorgesehene Aussparung 24, die durch eine Zusatzdichtung 25 gegen die Stütze abgedichtet ist. Durch die Zusatzdichtung ist auch im Bereich der Aussparung eine konsequente Abdichtung zwischen Rohseite 14 und Rein-seite 15 gegeben.

Der Aufbau der Stütze, bestehend aus Hohlstutzen 21 und Gewindestutzen 22 läßt sich der Figur 2 entnehmen. Diese beiden Bauteile bilden eine Aufnahme 26 für die Zusatzdichtung 25. Durch Anziehen der Verbindungsschraube 23, die von außen in den Hohlstutzen 21 eingeführt und anschließend in den Gewindestutzen 22 eingeschraubt wird, wird die Zusatzdichtung 25 in der Aufnahme 26 verquetscht, wodurch die Dichtung zustande kommt. Für eine anschließende Demontage des Filtereinsatzes weist der Hohlstutzen 21 eine Verliersicherung 27 auf, in der die Schraube nach dem Herausschrauben aus dem Gewindestutzen 22 verbleibt.

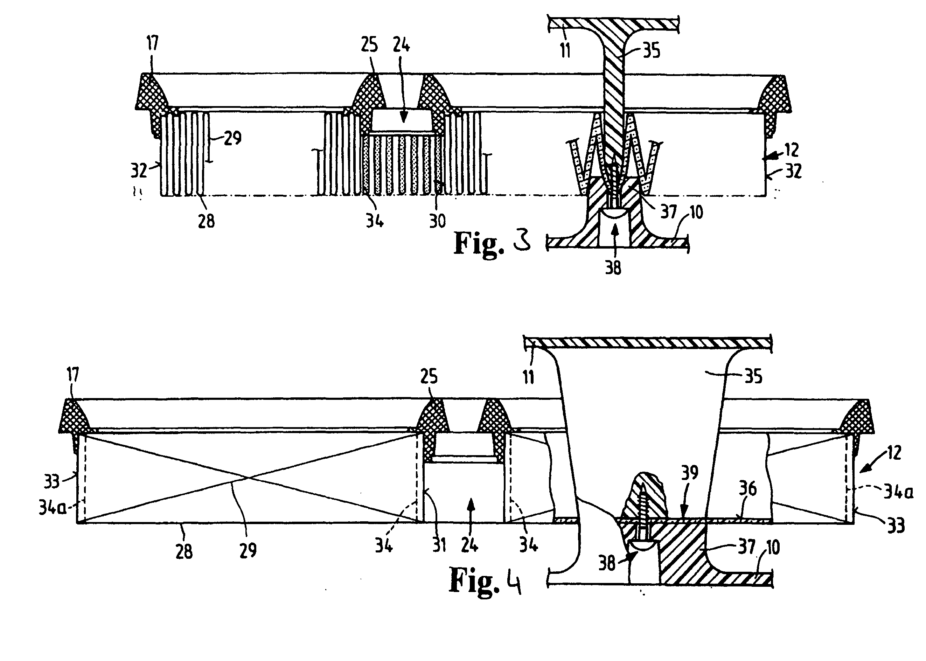

Die Figuren 3 und 4 zeigen Filtereinsätze 12 im Querschnitt, und zwar einmal längs zu Faltkanten 28 des Filterpapiers 29 (Figur 4) und einmal quer dazu (Figur 3). In beiden Fällen verläuft der Schnitt mittig durch die Aussparung 24, wobei deutlich wird, daß diese einen rechteckigen Querschnitt aufweist. Entlang der Faltkanten 28 weist die Aussparung einen Querrand 30 und im rechten Winkel dazu einen Stirnrand 31 auf. Die Zusatzdichtung 25 ist an dem oberen die Rohseite des Filtereinsatzes 12 bildenden Rand angespritzt und besteht aus PUR-Schaum. Sie weist dasselbe Profil auf wie die an Stirnkanten 32 und Seitenkanten 33 angebrachte Randabdichtung 17, die ebenfalls aus PUR-Schaum besteht. Zur Abdichtung der Stirnränder 31 kann die Zusatzdichtung 25 bis zur unteren die Reinseite des Filtereinsatzes bildenden Kante herabgezogen werden. Dies ist in den Figuren 3 und 4 jedoch nicht dargestellt. Die Abdichtung der jeweils benachbarten Filterfalten erfolgt hier durch eine einseitig aufgebrachte Leimraupe 34, die in Figur 3 in der Aufsicht auf den Stimrand 31 zu erkennen ist. Gemäß Figur 3 befindet sich die Leimraupe nur im Bereich der Aussparung 24. Es ist aber genauso möglich, diese bis zu den Seitenkanten 32 des Filtereinsatzes 12 zu verlängern, wodurch eine stabilisierende Wirkung in Querrichtung der Falten zustande kommt. Die Lage der Leimraupen 34 ist auch der Figur 4 zu entnehmen, wo sie gestrichelt dargestellt sind. Die Stirnkanten 33 des Filtereinsatzes sind ebenfalls durch Leimraupen 34a verschlossen.

Den Figuren 3 und 4 ist jedoch noch ein anderes Stabilisierungsprinzip zu entnehmen. Es handelt sich hierbei um ein Schwert 35, welches am angedeuteten Deckel 11 angebracht ist und in eine Filterfalte des Filtereinsatzes bis auf einen Faltengrund 36 eintaucht. Das Schwert drückt den Faltengrund 36 in eine Klemmeinrichtung 37, welche durch eine Verschraubung 38 fest mit einer Schwertkante 39 verbunden ist. Die Aussparung besteht also lediglich aus einem kleinen Loch im Faltengrund, welches durch die Verschraubung 38 erzeugt wird. Die Zusatzdichtung kommt bei dieser Ausgestaltung durch den Anpreßdruck zwischen Klemmeinrichtung 37 und Schwertkante 39 zustande. Die Klemmeinrichtung 37 ist am Gehäusekörper 10 angebracht. Durch die Verschraubung entsteht also eine Stütze, die sich zwischen Gehäusekörper 10 und Deckel 11 erstreckt.

## Patentansprüche

1. Filter, insbesondere für die Ansaugluft von Brennkraftmaschinen, bestehend aus einem einen Deckel (11) aufweisenden Gehäuse (10, 11) mit einem Einlaß (13) und einem Auslaß (16), wobei in das Gehäuse ein vom zu filternden Medium durchströmbarer Filtereinsatz (12) mit einem gefalteten Filtermedium eingesetzt ist, welcher eine mit dem Einlaß kommunizierende Rohseite (14) von einer mit dem Auslaß kommunizierenden Reinseite (15) dichtend trennt und wobei das Gehäuse mindestens ein Versteifung aufweist, wobei die Versteifung aus mindestens einer Verstrebung (21, 22) besteht, deren eines Ende an dem zu versteifenden Wandteil des Gehäuses angreift und deren anderes Ende abgestützt ist und wobei sich eine die Verstrebung bildende Stütze zwischen zwei zu versteifenden Wandteilen des Gehäuses (10, 11) erstreckt, **dadurch gekennzeichnet, daß** die mindestens eine Verstrebung (21, 22) durch eine Aussparung (24) im Filtereinsatz (12) hindurchläuft, wobei diese in das bereits gefaltete Filtermedium eingebracht ist und gegen die Verstrebung hin durch eine Zusatzdichtung (25) vollständig abgedichtet ist.

2. Filter nach Anspruch 1, **dadurch gekennzeichnet, daß** die Stütze aus zwei Stutzen (21, 22) besteht, die insbesondere durch eine Verbindungsschraube (23) lösbar miteinander verbunden sind, wobei der eine Stutzen an einem Wandteil des Deckels (11) und der andere am Gehäusekörper (10) angreift.

3. Filter nach einem der Ansprüche 1 oder 2, **dadurch gekennzeichnet, daß** die Zusatzdichtung (25) in eine Aufnahme (26) eingebracht ist, wobei die Aufnahme in die Verstrebung (21, 22) integriert ist.

4. Filter nach Anspruch 3, **dadurch gekennzeichnet, daß** die Aussparung (24) rechteckig ist, wobei zwei Querränder (30) der Aussparung parallel zu den Faltenkanten verlaufen.

5. Filter nach Anspruch 4, **dadurch gekennzeichnet, daß** die Zusatzdichtung (25) aus einem elastischen, an die Ränder der Aussparung (24) angespritzten Material, insbesondere PUR-Schaum, besteht.

6. Filter nach einem der Ansprüche 4 oder 5, **dadurch gekennzeichnet, daß** entlang von Stimrändem (31) der Aussparung (24) je eine einseitig auf das Filtermedium aufgebrachte Leimraupe (34) jeweils benachbarte Filterfalten dichtend verschließt und einen Teil der Zusatzdichtung (25) darstellt.

7. Filter nach Anspruch 6, **dadurch gekennzeichnet, daß** sich die Leimraupen (34) über alle Filterfalten des Filtereinsatzes erstrecken.

8. Filter, insbesondere für die Ansaugluft von Brennkraftmaschinen, bestehend aus einem einen Deckel (11) aufweisenden Gehäuse (10, 11) mit einem Einlaß (13) und einem Auslaß (16), wobei in das Gehäuse ein vom zu filtern-den Medium durchströmbarer Filtereinsatz (12) mit einem gefalteten Filtermedium eingesetzt ist, welcher eine mit dem Einlaß kommunizierende Rohseite (14) von einer mit dem Auslaß kommunizierenden Reinseite (15) dichtend trennt und wobei das Gehäuse mindestens eine Versteifung aufweist, wobei die Versteifung aus mindestens einer Verstrebung (35) besteht, deren eines Ende an dem zu versteifenden Wandteil des Gehäuses angreift und deren anderes Ende abgestützt ist und wobei sich eine die Verstrebung bildende Stütze zwischen zwei zu versteifenden Wandteilen des Gehäuses (10, 11) erstreckt, **dadurch gekennzeichnet, daß** ein, eine Verstrebung bildendes Schwert (35) in eine der Filterfalten des Filtereinsatzes (12) eingebracht ist, wobei
- das Schwert (35) Wandteile des Gehäuses (10, 11) auf beiden Seiten des Filtereinsatzes miteinander verbindet
- wobei die Verbindung eine lösbare Verbindung, insbesondere eine Verschraubung (38) ist, die zumindest auf der in Einsetzrichtung gesehen hinter dem Filtereinsatz gelegenen Seite zwischen dem Wandteil und dem Schwert (35) vorgesehen ist, so daß die Zusatzdichtung durch den Anpreßdruck .zwischen dem Schwert (35) und dem zu versteifenden Wandteil zustande kommt.

9. Filter nach Anspruch 8, **dadurch gekennzeichnet, daß** eine Aussparung in Form eines kleinen Loches im Faltengrund (36) einer Filterfalte des Filtereinsatzes untergebracht ist, welche durch die Verschraubung erzeugbar ist.

10. Filter nach Anspruch 8 oder 9, **dadurch gekennzeichnet, daß** eine Klemmeinrichtung (37) am Gehäuse (10) angebracht ist, wobei die Zusatzdichtung durch den Anpreßdruck zwischen der Klemmeinrichtung (37) und der Schwertkante (39) zustande kommt.

## Claims

1. Filter, more especially for the intake air of internal combustion engines, said filter comprising a housing (10, 11), which includes a cover (11) and has an inlet (13) and an outlet (16), a filter element (12), which can be traversed by the medium to be filtered and has a folded filter medium, being inserted into the housing, which element sealingly separates an unfiltered side (14), which communicates with the inlet, from a filtered side (15), which communicates with the outlet, and the housing having at least one reinforcement, the reinforcement comprising at least one strut (21, 22), one end of which co-operates with the wall portion of the housing to be reinforced, and the other end of which is supported, and a support, which forms the strut, extending between two wall portions of the housing (10, 11) which are to be reinforced, **characterised in that** the at least one strut (21, 22) extends through a recess (24) in the filter element (12), said recess being formed in the already folded filter medium and being completely sealed from the strut by an additional seal (25).

2. Filter according to claim 1, **characterised in that** the support comprises two connection-tubes (21, 22) which are, more especially, detachably interconnected by a connecting screw (23), one tube co-operating with a wall portion of the cover (11), and the other tube co-operating with the housing body (10).

3. Filter according to one of claims 1 or 2, **characterised in that** the additional seal (25) is introduced into a receiving means (26), the receiving means being incorporated in the strut (21, 22).

4. Filter according to claim 3, **characterised in that** the recess (24) is rectangular, two transverse edges (30) of the recess extending parallel to the fold edges.

5. Filter according to claim 4, **characterised in that** the additional seal (25) is formed from a resilient material, more especially expanded polyurethane, which has been injection-moulded onto the edges of the recess (24).

6. Filter according to one of claims 4 or 5, **characterised in that** a respective glue bead (34), which is applied to one side of the filter medium, sealingly closes adjacent filter folds along leading edges (31) of the recess (24) and constitutes a portion of the additional seal (25).

7. Filter according to claim 6, **characterised in that** the glue beads (34) extend over all of the filter folds of the filter element.

8. Filter, more especially for the intake air of internal combustion engines, said filter comprising a housing (10, 11), which includes a cover (11) and has an inlet (13) and an outlet (16), a filter element (12), which can be traversed by the medium to be filtered and has a folded filter medium, being inserted into the housing, which element sealingly separates an unfiltered side (14), which communicates with the inlet, from a filtered side (15), which communicates with the outlet, and the housing having at least one reinforcement, the reinforcement comprising at least one strut (35), one end of which co-operates with the wall portion of the housing to be reinforced, and the other end of which is supported, and a support, which forms the strut, extending between two wall portions of the housing (10, 11) which are to be reinforced, **characterised in that** a tongue (35), forming a strut, is introduced into one of the filter folds of the filter element (12),
- the tongue (35) interconnecting wall portions of the housing (10, 11) on both sides of the filter element, and
- the connection being a detachable connection, more especially a screw connection (38), which is provided between the wall portion and the tongue (35), at least on the side situated behind the filter element when viewed with respect to the direction of insertion, so that the additional seal is formed by the contact pressure between the tongue (35) and the wall portion to be reinforced.

9. Filter according to claim 8, **characterised in that** a recess, in the form of a small hole, is accommodated in the base (36) of a filter fold of the filter element, said recess being producible by the screw connection.

10. Filter according to claim 8 or 9, **characterised in that** a clamping means (37) is mounted on the housing (10), the additional seal being formed by the contact pressure between the clamping means (37) and the tongue edge (39).

## Revendications

1. Filtre, notamment pour l'air d'aspiration des moteurs à combustion interne, composé d'un carter (10, 11) présentant un couvercle (11) avec une admission (13) et un échappement (16), un élément filtrant (12) traversé par la substance à filtrer étant placé dans le carter avec un support filtrant plié, lequel sépare hermétiquement un côté tuyau (14) communiquant avec l'admission du côté propre (15) communiquant avec l'échappement, le carter présentant un renforcement, composé d'au moins une entretoise (21, 22) dont une extrémité est en prise sur la partie de paroi renforcée du carter et dont l'autre extrémité est supportée par un montant formant l'entretoise s'étendant entre les deux parties de paroi à renforcer du carter (10, 11),
**caractérisé en ce qu'**
au moins une des entretoises (21, 22) traverse un évidement (24) dans l'élément filtrant (12), cet évidement étant placé dans le support filtrant déjà plié et rendu complètement étanche face au renforcement grâce à un joint supplémentaire (25).

2. Filtre selon la revendication 1,
**caractérisé en ce que**
le support se compose de deux manchons (21, 22) qui sont reliés l'un à l'autre de façon amovible par une vis de jonction (23), l'un des manchons étant en prise sur une partie de la paroi du couvercle (11) et l'autre sur le corps de carter (10).

3. Filtre selon l'une des revendications 1 ou 2,
**caractérisé en ce que**
le joint supplémentaire (25) est placé dans un logement (26), ce logement étant intégré dans l'entretoise (21, 22).

4. Filtre selon la revendication 3,
**caractérisé en ce que**
l'évidement (24) est rectangulaire, deux bords parallèles (30) de l'évidement étant parallèles aux arêtes des plis.

5. Filtre selon la revendication 4,
**caractérisé en ce que**
le joint supplémentaire (25) se compose d'un matériau élastique injecté sur les bords de l'évidement (24), notamment de la mousse polyuréthane.

6. Filtre selon l'une des revendications 4 ou 5,
**caractérisé en ce qu'**
des cordons de colle (34) placée d'un côté sur le support filtrant, le long des bords avant (31) de l'évidement (24), ferme hermétiquement chaque pli voisin du filtre et représente une partie du joint supplémentaire (25).

7. Filtre selon la revendication 6,
**caractérisé en ce que**
les cordons de colle (34) s'étendent sur tous les plis de filtre de l'élément filtrant.

8. Filtre, notamment pour l'air d'aspiration des moteurs à combustion interne, composé d'un carter (10,11) présentant un couvercle (11) avec une admission (13) et un échappement (16), un élément filtrant (12) traversé par la substance à filtrer étant placé dans le carter avec un support filtrant plié, lequel sépare hermétiquement un côté tuyau (14) communiquant avec l'admission et un côté propre (15) communiquant avec l'échappement, le carter présentant un renforcement, composé d'au moins une entretoise (35) dont une extrémité est en prise sur la partie de paroi à renforcer du carter et dont l'autre extrémité est supportée par un montant formant l'entretoise s'étendant entre deux parties de paroi à renforcer du carter (10, 11),
**caractérisé en ce qu'**
une lame (35) formant une entretoise est placée dans l'un des plis de filtre de l'élément filtrant (12),
- la lame (35) reliant des parties de paroi du carter (10, 11) les unes aux autres sur les deux côtés de l'élément filtrant,
- la jonction étant une jonction amovible, notamment un raccord à vis (38), prévue au moins sur le côté situé entre la partie de paroi et la lame (35) derrière l'élément filtrant si l'on se place dans la direction de chargement de sorte que le joint supplémentaire est créé par la force de serrage entre la lame (35) et la partie de paroi à renforcer.

9. Filtre selon la revendication 8,
**caractérisé en ce qu'**
un évidement est réalisé sous la forme d'un petit trou dans le fond (36) d'un pli de filtre de l'élément filtrant, lequel trou peut être foré par le raccord à vis.

10. Filtre selon la revendication 8 ou 9,
**caractérisé en ce qu'**
un dispositif de serrage (37) est placé sur le carter (10), le joint supplémentaire étant créé par la force de serrage entre le dispositif de serrage (37) et l'arête de la lame (39).
